# EUROPEAN PATENT APPLICATION

(11) **EP 1 168 830 A1**
(43) Date of publication of application: **02.01.2002**
(21) Application number: 00810568.6
(22) Date of filing: 30.06.2000
(51) Int. Cl.: H04N 5/232

(54) **Computer aided image capturing system**

(71) Applicant: Wells & Verne Investments Ltd, St. Helier, Jersey JE4 8TR (GB)
(72) Inventor: Osen, Karl, CH-1282 Dardagny (CH)
(74) Representative: Wenger, Joel-Théophile

(57) **Abstract**

A computer aided filming system, allowing to acquire images from at least one camera of a moving target (2, 3). This target moves within known geographical and physical boundaries.

The system according the invention comprises pointing means to point at the moving target, computation means which determine the position of the moving target based on the pointing angles of the said pointing means and the corresponding boundary data, thus allowing said computation means to determine the pointing angles and the focus of at least one camera.

The pointing means could be the main camera, an eye position sensor coupled with an head position sensor or an operator pointable structure with pan and tilt sensors.

## Description

The present invention concerns a computer aided filming system according to the preamble of claim 1. It also concerns a method for acquiring images of a moving target.

The following definitions will be used in the description of the invention.
CAF: Computer Aided Filming system, i.e. this invention.
Robot: A camera with remote-controlled motorized pan, tilt, angle-of-view, and focus. These robots are known in themselves as standard equipment to film targets in a wide range of directions and distances.
Pointing device: Any device or mechanism allowing an operator to indicate to CAF the line-of-sight towards a target in three-dimensional space.
Image: The video stream from a camera.
Frame grabber: An electronics device capable of converting an image into a format suitable for computer image analysis and processing of various kinds.
Cropping: An image processing system that produces a new image from an original image, by selecting a part of the original image.
Overview camera: A robot used to acquire a general view of the target and its surroundings.
Overview area: The part of the visual environment captured by the overview camera.
Overview image: The image produced by the overview camera.
Cropped overview image: A cropped overview image. The cropping area's size and position may change continuously to serve the purpose of the invention.
Overview display: A monitor (cathode ray tube or other suitable technology) displaying the overview image or a cropped overview image.
Overview robot: The robot with the overview camera.
Selection zone: A part of the overview display selected by an operator to be the most interesting part of the overview display.
Detail camera: A robot used to acquire a detailed view of the target.
Detail area: The part of the visual environment captured by the detail camera. CAF tries to make the detail area match the selection zone.
Detail image: The video stream produced by the detail camera.
Detail display: A monitor (cathode ray tube or other suitable technology) displaying the detail image.
Detail robot: The robot with the detail camera.

The invention aims at solving the following technical problem:

A camera operator is confronted with a range of challenges when using a manually pointed camera having a manually controlled lens to film a rapidly moving target at short or long distances, including:
- Keeping the right focus to maintain a sharp image at all times;
- Choosing an angle-of-view with a sufficient security margin to avoid any loss of the target in the image;
- Adjusting the camera's pointing angles, i.e. the pan and tilt angles;

These tasks are often too demanding to allow for some artistic aspects in the operator's activity, such as:
- Concentrating on the parts of the target that are the most interesting for the viewers;
- Introducing some variation and change in the image of said parts of the target to be filmed;
- Filming two or more targets at the same time;
- Switching rapidly between targets;

In many filming situations there is not only no capacity left for creativity and artistic work, but also the basic pointing and focusing tasks become too difficult even for the most skilful camera operator. Such situations are present when:
- The image of the target moves randomly on the screen, thereby degrading the viewers' perception of the real movements of the target, and its speed relative to its surroundings;
- The image of the target moves too fast relative to the screen, thereby blurring the image;
- The image of the target is usually small on the screen, suggesting that the camera operator has problems pointing his camera accurately enough to use smaller angles-of-view;
- The image of the target is out of focus (note that a bad focus adjustment is not easily visible at large angles-of-view, because the lens then has a large depth-of-field);

All these symptoms are caused by an insufficient synchronization between the movements of the target and the way the operator manipulates the camera and its lens. This lack in synchronization is caused by the limits of the human visual system, reaction speed, muscular accuracy, and perseverance.

The invention proposes a system (CAF) to solve these problems by the means listed in the characterizing part of claim 1.

To allow human operators to improve the quality of image acquisition, the operator is using a convenient pointing device instead of manually manipulating a heavy, cumbersome camera.

The purpose of a pointing device is to allow an operator to indicate to CAF in which direction he sees the target. CAF uses the position of the pointing device and its line-of-sight as inputs. The position of the pointing device may be stationary (e.g. mounted on a fixed pedestal) or moving (e.g. mounted in a helicopter).

Many mechanisms may be used as pointing devices, including:
- A stationary, wide-angle camera filming the area of interest, the image from said camera being displayed at a screen, the operator using a mouse to position an arrow pointing at the target appearing on the screen. CAF uses the position and orientation of the camera, the characteristics of its lens, and the position of the on-screen arrow to compute the line-of-sight towards the target.
- A stationary, wide-angle camera filming the area of interest, the image from said camera being displayed at a screen, the operator using a mouse to position an arrow pointing at the target appearing on the screen. CAF uses the position and orientation of the camera, the characteristics of its lens, and the position of the on-screen arrow to compute the line of sight towards the target. The image of from the camera is also read into a frame grabber, which allows a computer to track everything that moves in the image by using blob-tracking algorithms. When the operator point-and-clicks on a target the computer identifies the corresponding blob and thereafter repeatedly computes the line-of-sight to that target, i.e. the CAF automatically tracks the target after it has been selected by the operator.
- A pedestal with a gimbaled structure equipped with pan and tilt sensors, said structure being pointed at the target by the operator. CAF uses the position and orientation of the pedestal, plus the pan and tilt angles of the structure to compute the line-of-sight towards the target.
- A camera equipped with pan and tilt motors filming the area of interest, the image from said camera being displayed on a screen with a center cross-hair, the operator using a joystick to point the camera so that the image of the target appears at the center of the screen. CAF uses the position and orientation of the camera robot and its pan and tilt angles to compute the line-of-sight towards the target.
- An operator equipped with eye and head tracking systems, said operator having direct visual contact with the target. CAF uses the position of the operator's head, the head orientation, and the eye-in-head orientation to compute the line-of-sight towards the target.

The target to be filmed may be free to move in one, two, or three dimensions. Depending on the degrees of freedom of movement the pointing devices above may be used to determine the position of the target.
- A target free to move in one dimension can move along a curve of known three-dimensional shape. For such a target a single pointing device is required to estimate its position, which is the point on the curve being closest to the line-of-sight. Care must be taken so that the position of the pointing device and the position and shape of the curve (in the area of interest) allows unique and accurate mathematical solutions to be found. In case the geometric dilution of precision gets too high then additional pointing devices located at different places may be introduced. Targets moving in one dimension include trains, cars on narrow roads, aircraft on the glide slope before landing, and motorcycles following the optimal trajectory on a race circuit.
- A target free to move in two dimensions can move on a surface of known topology in three-dimensional space. For such a target a single pointing device is required to estimate its position, which is the point of intersection between the line-of-sight and the surface. Care must be taken so that the position of the pointing device and the shape of the surface (in the area of interest) allows unique and accurate mathematical solutions to be found. In case the geometric dilution of precision gets too high then additional pointing devices located at different places may be introduced. Targets moving in two dimensions include boats, cars on a motorway, a tank on a battlefield, and a running horse in a field.
- A target free to move in three dimensions has no restrictions of movement. For such a target two pointing devices are required to estimate its position, said pointing devices being manipulated by two operators at different positions, the estimated position being the middle point of the shortest line connecting the two lines-of-sight. Care must be taken so that the position of the pointing devices and the position of the target (in the volume of interest) allows unique and accurate mathematical solutions to be found. In case the geometric dilution of precision gets too high then additional pointing devices located at other places may be introduced. Targets moving in three dimensions include aircraft, boats moving in high waves, vehicles moving on a surface of unknown topology, and trains moving on rails of unknown topology.

Although a pointing device is more convenient to operate than a manual camera, the physical limitations of human beings still apply. This means that the positions determined by the mechanisms described above will have varying degrees of noise introduced by the operator.

In case the noise is caused by the operator's muscular movements the noise may be reduced mechanically by attaching one or more smoothing devices to the pointing device. These smoothing devices include but are not limited to:
- Weights to increase inertia;
- Gyros to dampen angular oscillations;
- Gearbox with flywheel to dampen angular speed oscillations;
- Pneumatic or hydraulic dampers to resist movements;

Another way to deal with operator induced noise is to use various computational filtering techniques, such as Kalman filtering, allowing the reduction of such noise for a target of known characteristics operating in an environment of known characteristics. The filtering consists of maintaining a computer model of the target, the computer knowing the physical limitations and likely behavior of the target, enabling it to separate noise from data in the position input data stream. Such filtering is essential to obtain a quality of filming significantly better than when using a manually operated camera, and is therefore normally used.

Having determined the position of the target, CAF sends commands to one or more overview robots to make them point and focus at said target. The pointing angles and focus distance for a robot is easily computed since the position of the target and the robot as well as the orientation of the latter is known to CAF. The desired angle-of-view may be entered manually by an operator, or it may be computed automatically by the system to maintain a constant apparent size of the target in the overview image. The quality of the overview image is superior to those obtainable by using a manual camera, and may be used for broadcasting purposes.

It should be noted that a robot may be stationary or moving, and in the case it is moving its position and orientation may be determined continuously by using off-the-shelf GPS and inertial measurement products.

Although the overview image has a high image quality, the way it is obtained gives little room for artistic content. The overview image can therefore advantageously be enhanced by a detail image, obtained by using a detail robot. The detail image is obtained by making an operator position a selection zone on an overview display. The position of the selection rectangle is used by CAF to control the detail robot, so that the detail image corresponds as closely as possible to the image inside the selection zone. Since the line-of-sight of the overview camera and detail camera in general is slightly different, CAF computes a special distance-to-target and focusing distance for the detail camera, using the appropriate terrain models for distance estimation. This enhanced distance estimation is important for the detail camera because said camera is often used with very small angle-of-views giving little depth-of-view, therefore requiring very accurate focus control.

The positioning of the selection zone can be done using the following methods:
- Two mice (or joysticks): The first mouse (or joystick) is used to position the center of the selection zone on the screen, the second mouse (or joystick) is used to select its size.
- A mouse and a point-of-regard system: The point-of-regard system uses as inputs a head-band mounted eye-in-head measurement system together with a forward looking miniature camera detecting the frame of the overview display. The center of the selection zone is set to coincide with the operator's point-of-regard on that display. The operator uses a mouse or joystick to control the size of the selection zone.

One purpose of the overview image is to provide a coarse tracking image for the task of filming a moving target. This task consists mainly of keeping the target well within the overview image, anticipating movements of the target as much as possible, thereby making the target move as smoothly as possible in the overview image. Another purpose of the overview image is to provide visual information about the target's environment, in order to allow an operator to be aware of the situation of the target. For example, if the target is the leading competitor in a race, and if a challenger attempts to overtake this leading competitor, the operator should be aware of this attempt. The overview image should then also include the challenger, to allow an operator to appropriately position the selection zone, thereby choosing the best images to broadcast.

In a particular embodiment of the invention, the target's movements are within known boundaries. This is the case when the target is a competitor in a track race, the competitors being restricted to stay on a defined track. The track topology and boundaries are stored in the position data filtering system to improve the pointing of the overview camera(s).

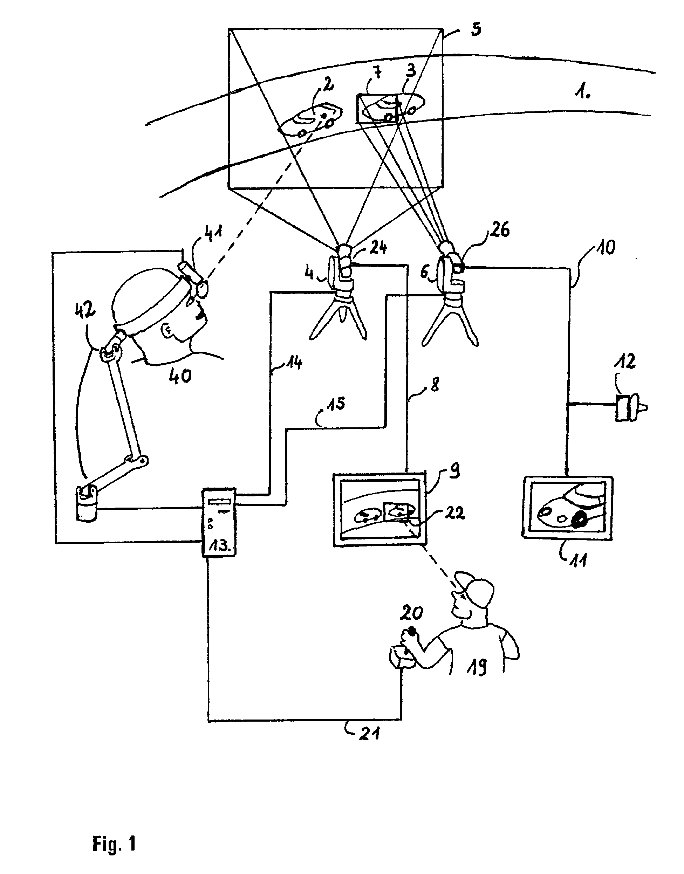

The figure 1 shows the invention where the operator 40 has direct visual contact with the target 2, and where the operator's position is known to the computer. The operator's eye-in-head orientation is measured using an eye tracking system 41 and the operator's head position is measured using a head position sensor 42.

When the operator is looking at the racecar 2 on a racetrack 1 with known topology, the computer 13 is able to compute that racecar's position by finding the intersection point between the track's surface and the operator's line-of-sight. In this embodiment, the angle-of-view of the overview camera 24 can be adjusted automatically so that the filming area at the target's distance is kept at a fixed size.

The main advantage of letting the pointing device operator have direct visual contact with the target is that gives him an outstanding situational awareness. To further improve the performance of the system, one may have more than one such operator, thereby allowing rapid selection of new targets.

In this case, the operators would all be equipped with an "I am active" button, making that operator current when pressed. When two or more operators are used this will also grant the operators short rest periods, which is needed since the optimal manipulation of a pointing device requires lots of concentration.

It has been found that an overview robot and a detail robot in some cases can be integrated in one robot with two cameras. It has also been found that in some cases the overview image can advantageously be a virtual image generated by a computer.

Three embodiments will now be described with the help of the annexed figures.

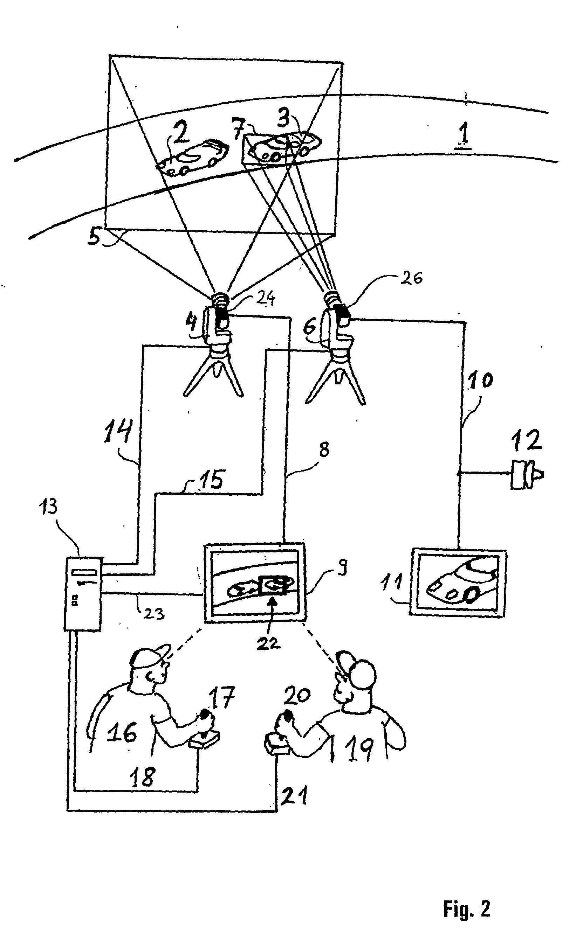

In an embodiment called Dual Robot System, two cameras, namely the overview camera and the detail camera, are mounted on separate robots, as shown on figure 2. These robots are usually located close together and are aligned in space. "Aligned in space" means that the multi-legged stands of the robots should be firmly secured to the ground, to avoid any accidental displacement or disorientation of their coordinate systems. The separate robots allow the cameras to have different lines-of-sight. In this embodiment the overview display is the same as the overview image, which means that the full overview image as produced by the overview camera is shown on the overview display.

In the Dual Robot System, the pointing angles and the angle-of-view of the detail camera are computed from:
- The size of the selection zone in the overview display;
- The position of the selection zone in the overview display;
- The line-of-sight of the overview camera;
- The angle-of-view of the overview camera.

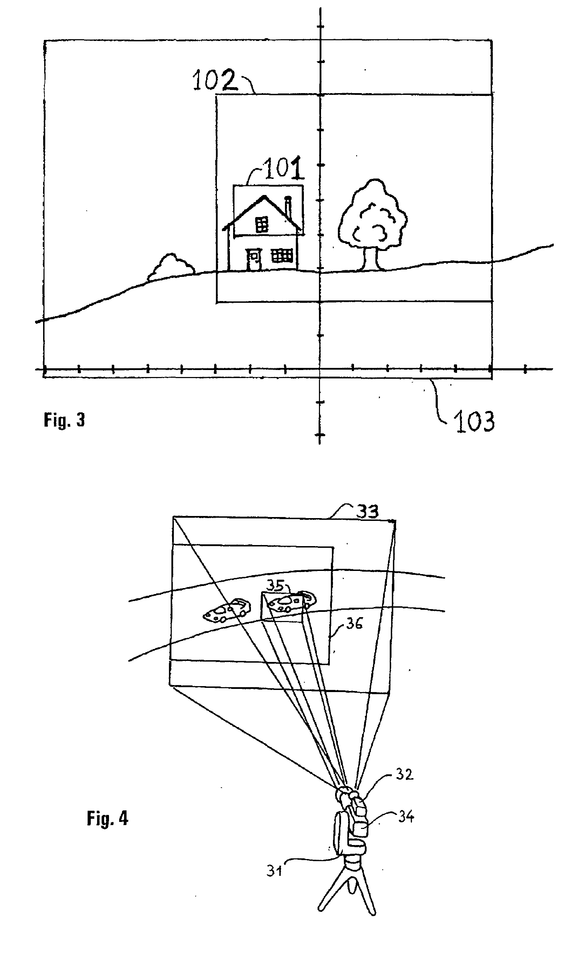

In the embodiment called Common Robot System, two cameras, namely the overview camera 32 and the detail camera 34, are mounted together on a common robot as shown on Figure 4. Figure 3 shows a landscape including a house and a tree. A rectangle, referenced 101, shows the detail area i.e. the area of interest, as compared to the cropped overview display 102 and to the overview image 103. This embodiment requires the overview display 102 to be generated as a cropped rectangle within the overview image 103. In the Common Robot System, both cameras have the same line-of-sight. Assuming that the detail area is no more the house roof of Figure 3 but the tree, changing the cropping area and pointing the cameras onto the tree will allow the system to select a detail area encompassing the tree, with no apparent motion in the overview display. The line-of-sights of both cameras will cross the center of the detail area, but their angle-of-views will be different. The detail display will always correspond to the detail image. The overview display will, however, generally move a lot within the overview image, thereby allowing the apparent line-of-sight of the overview display to deviate several degrees from the line-of-sight of the detail camera.

The advantage of a Common Robot System when compared to a Dual Robot System, is that the required image cropping system in general costs less than the second camera robot. The alignment process, previously referred to when robots are said to be aligned in space, is furthermore eliminated.

In the Common Robot System, the pointing angles and the angle of view of the detail robot are computed from:
- The size of the selection zone in the overview display;
- The position of the selection zone in the overview display;
- The line-of-sight of the center of the overview display;
- The angle-of-view of the overview display.

It can be noted that the line-of-sight of the center of the overview display in general does not coincide with the line-of-sight of the overview camera, and that the angle-of-view of the overview display always will be smaller than or equal to the angle-of-view of the overview camera.

The Single Robot System is for cases where the position and the orientation of the targets to be filmed and their environment are known or well estimated, thereby permitting a virtual overview image to be created instead of using a real overview image. The advantage results not only from a cost point of view, but the fact that no video transfer of the overview image is required can also be important in applications with limited communication bandwidth.

The coordinate system of Figure 3 is graduated in degrees and shows the camera pointing angles and field-of-view for the three previously described embodiments.

In the Dual Robot System, the detail display 101 is the same as the detail image 101 and the overview display 102 is the same as the overview image 102. The larger rectangle 103 does not apply in the Dual Robot System.

In the Common Robot System, the detail display 101 is the same as the detail image 101, the overview display 102 is obtained by cropping the overview image 103.

In the Single Robot System, the detail display 101 is also the same as the detail image, and the overview display 102 is computer-generated from known target positions, orientations, and topography. The rectangle referenced 103 is not relevant in this case.

Regardless of the embodiment chosen among the three above-described embodiments, the system uses four input parameters. The parameters and their numerical values for the case represented in Figure 3 are as follows.

The input command parameters of the overview display 102 are
- Overview display pan = 1 degree right
- Overview display tilt = 5 degrees up
- Overview display angle-of-view = 8 degrees (horizontal)

The input command parameters of the detail area 101 are:
- Detail area width = 0.25, given as a fraction of the overview display width
- Detail area center = (0.188, 0.338), given in overview display coordinates

The position of the detail area 101 is described in overview display coordinates. This coordinate system is used to express positions in the overview display 102, with the following corner values, assuming an aspect ratio of 4:3.
(0,0) = lower left corner
(0,0.75) = upper left corner
(1,0.75) = upper right corner
(1,0) = lower right corner

For Figure 3 the following values are computed from the input parameters in the Dual Robot System :
- Detail camera pan = 1.5 degrees left
- Detail camera tilt = 4.75 degrees up
- Detail camera angle-of-view = 2 degrees (horizontal)
- Overview camera pan = 1 degree right (same as overview display pan)
- Overview camera tilt = 5 degrees up (same as overview display tilt)
- Overview image angle-of-view = 8 degrees (horizontal) (same as overview display angle-of-view).

For Figure 3 the following values are computed from the input parameters in the Common Robot System:
- Overview camera pan = detail camera pan = 1.5 degrees left
- Overview camera tilt = detail camera tilt = 4.75 degrees up
- Detail image angle-of-view = 2 degrees (horizontal)
- Overview camera angle-of-view = 13 degrees (horizontal)
- Overview display center : (0.692 , 0.408), in overview image coordinates
- Overview display width = 0.615, given as fraction of overview image width.

As shown in figures 2 and 4, the task is to film cars 2 and 3 moving fast on a race track 1, possibly at distances exceeding 1 000 meters.

Figure 2 shows the general layout of the system using the example of a Dual Robot configuration.

Figure 4 shows an example where the overview camera 32 and the detail camera 34 are mounted in a Common Robot configuration; 33 is the overview image of the overview camera. 36, a section of the overview image 33, is used for overview display, which gives situational awareness to the operator. 35 is the detail area of the detail camera 34.

In the example of Figure 4, the overview display 36 is generated by cropping the overview image 33. Because cameras 32 and 34 are mounted on a common robot, the computer 13 crops the overview image 33 to obtain the desired size and position of the selection zone 35 inside it, thus imitating a dedicated robot for overview camera 32.

Turning now to Figure 2, featuring a Dual Robot System configuration, the computer 13 runs a program which performs the calculations and control functions of the invention. The program notably contains a detailed topographic description of the track boundaries, the dynamic characteristics of the cars and their typical behavior, as well as the positions and orientations of the cameras. It should be noted that track boundaries are to be understood in a larger sense, because a competitor temporarily passing the track boundaries can be a target for the camera(s).

It should be noted that in the embodiments involving cropping from the frame grabber, the computer 13 can usefully be equipped with a cropping subset. In the case where the computer 13 is a personal computer, this subset can include for example a Corona board inserted in the computer 13. Corona is a trade name of the MATROX Company. Information on Matrox Corona specifications is available on www.matrox.com

In the embodiment of Figure 2, operator 16 uses a multi-function joystick 17, connected to computer 13 by data link 18, to control the speed of a mathematical car model running in the computer 13, and computer 13 uses the position of this model car to control the overview camera 24 and robot 4 to film the mathematical car model as if it were on the track 1. The task of operator 16 is to use joystick 17 to drive the mathematical car model so that it overlays the real car (or cars 2,3 on Figure 2) to be filmed, thereby obtaining an overview image 5 of that real car on overview display 9. The real cars 2,3 are filmed so that they appear somewhat small in the overview image, thereby maximizing the situational awareness of the operators 16 and 19. This method of generating an overview image reduces the job of operator 16 to one main task: controlling the speed. Most other functions, including focusing and zooming, can be handled automatically by the computer 13 via data links 14 and 15.

The real car (or cars) appearing on the overview display 9 are moving, in spite of their high speed on the track 1, very slowly with respect to the overview image itself. This allows operator 19 to use his multi-function joystick 20 to position and size the selection zone 22, i.e. the detail area as previously defined, on the overview display so that this rectangle 22 contains the image area of interest. In the example of Figure 2, the image area of interest is a portion 7 of real car 3. The selection zone 22 is displayed as a rectangle frame on the overview display, overlaying the overview image captured by the overview camera 24 via data link 8. The position and size of selection zone 22 in the overview display 9 are provided by the computer 13 via data link 23.

The computer 13 uses the position of the selection zone as chosen by joystick 20 through data link 21, and the current settings of the overview camera 24 to compute :
- The detail robot pointing angles
- The detail camera's 26 angle-of-view so that it films the area appearing in the selection zone 22 as chosen by operator 19 with the help of joystick 20.

Although operators 16 and 19 in general only look at the overview display 9, the figure 2 also shows an optional detail display 11 for viewing the image from the detail camera 26 through a data link 10. This detail display 11 can optionally also be used by operator 19 as an aid to position the detail area 7. The figure 2 also shows a microwave data link 12 allowing the detail image to be transferred to a TV production unit (not shown).

During initialization of the system, the mathematical car model adopts a typical trajectory on track 1, corresponding to the track topography, the car characteristics, and to the supposed typical skill of a car race pilot. The model is later adjusted to match to real race situations.

In a particular embodiment of the invention, the mathematical car model is refreshed by actual data, every time the real cars 2, 3 have completed a tour on the track 1 of the circuit. This is particularly useful when weather conditions influence the speed of all competitors or when a competitor suffers a breakdown, forcing the others to adapt their speeds and trajectories.

In a particular embodiment of the invention, the mathematical car model is refreshed automatically by position data form the target car, such as data from an on-board GPS receiver. These position data can be provided by GPS receivers as explained in Patent Application No PCT/189410043 1.

In a particular embodiment of the invention, the system includes image analysis capabilities, known in themselves, that recognize the target and control the overview camera in lieu of operator 16.

According to another aspect of the invention, the operator is equipped with an eye tracking systems which automatically recognizes and tracks the position of the operator's eye. The eye, illuminated by a low-level infrared (IR) light, is scanned by an IR sensitive video camera. Under normal conditions, the pupil of the eye appears as a dark hole, or sink, to the illumination. This "dark pupil" image is input to a real-time eye tracking system consisting of a digital image processor that outputs pupil size and position coordinates relative to the scan of the camera.

The eye tracking technique allows the system to reliably track eye position with virtually any subject. Eye glasses or contact lenses do not normally interfere with system operation and the pupil is tracked over the full range of ambient illumination, from darkness to full sunlight.

This system is coupled with a head position detector such as a tridimensional mouse tracking system or a head-band mounted forward-looking camera. The operator's head position as well as the eye position define the exact point of regard on the screen or in the visual environment. The eye tracking technique provides very precise and fast pointing data. The operator, instead of using a joystick or a mouse to follow the moving object, simply looks at this object on the overview display or directly at the real object.

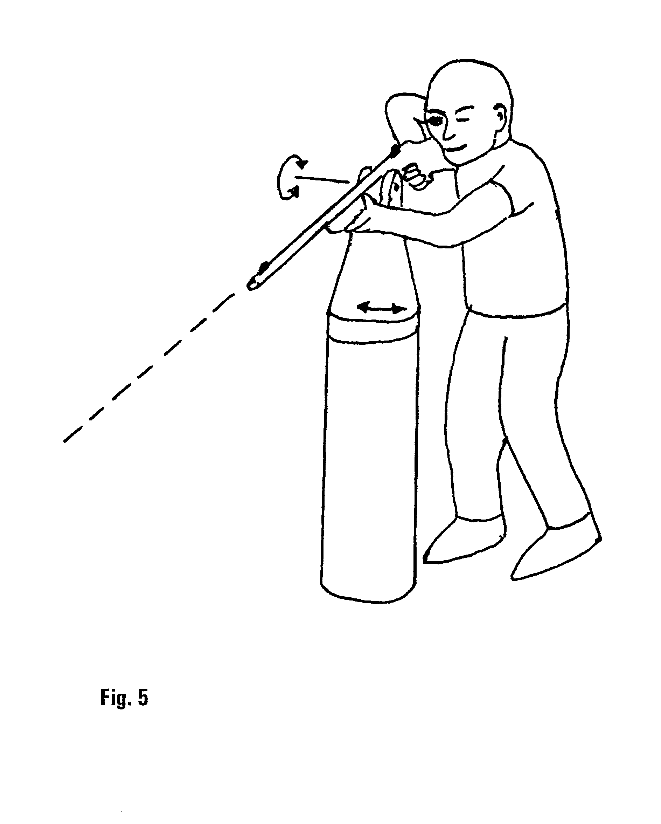

The figure 5 shows a pointing device which may be used instead of the more complex and costly eye tracking device. This device is a rifle like structure mounted on a pedestal with pan and tilt angle sensors. The previously described "I am active" button is in this case a switch connected to the rifle trigger.

Whereas using direct visual contact offer a great advantage as far as target selection is concerned, the overview operator sitting in front of the overview screen can often do better tracking once the tracking process has been stabilized. Therefore, the best system consists of having an operator at the overview display, supported by one or more target selection operators (equipped with pointing devices) having direct visual contact with the targets.

## Claims

1. A computer aided filming system, allowing to acquire images from at least one camera of a moving target (2, 3), said target having known physical and behavioral characteristics and moving within known trajectory topology and boundaries, **characterized in that** said system comprises pointing means to point at the moving target, computation means to determine the position of the moving target based on the pointing angles and position of said pointing means and said target and trajectory characteristics, thus allowing said computation means to determine the pointing angles and the focus distance of at least one robot, said robot being a camera with remote-controlled motorized pan, tilt, angle-of-view, and focus.

2. A system according to claim 1, **characterized in that**, the computation means determine the distance between each robot and the moving target (2,3) and has means to control the angle-of-view of said robot according to the selected apparent target size in the image.

3. A system according to claims 1 or 2, **characterized in that**, the robots are spatially distributed and that the computation means has data defining the spatial position (x,y,z) and orientation (azimuth, pitch, roll) of each robot.

4. A system according to claim 1 to 3, **characterized in that** the pointing means is a robot with joystick or other input device for pointing control.

5. A system according to claim 1 to 3, **characterized in that** the pointing means is either an eye position sensor coupled with a head position sensor or an operator pointable structure with pan and tilt sensors.

6. A system according to claims 1 to 5, **characterized in that**, the computation means comprise a mathematical model of the target movement, said computation means determining dynamically the pointing angles and the focus of at least one robot based on the target position acquired by the pointing means and the mathematical model, said mathematical model being capable of reducing operator induced noise in the pointing data.

7. A system according to claim 6, in which the computation means automatically updates the mathematical target model by position data and dynamics received from the target (2,3).

8. A system according to claims 1 to 7, **characterized in that**, an overview image (5, 33) is acquired by an overview camera framing the target (2, 3), said overview image (5, 33) procuring situational awareness to an operator (19), said operator (19) controlling the acquisition of the detail image (7, 35) by selecting the part of the overview image (5, 33) of interest with the help of a man-machine interface (20).

9. A system according to claim 8, in which image analysis capabilities recognize the target (2, 3) and provide information to a computer (13) to allow the overview robot (4) and the overview camera (24) to continuously correct its absolute pan and tilt angles and keep the target (2, 3) in its view frame (5).

10. A system according to claims 8 to 9, **characterized in that**, the position and the orientation of the target (2, 3) and its environment are known, permitting the creation of a virtual overview image.

11. A system according to claims 8 to 10, **characterized in that**, the man-machine interface (20) comprises joysticks, graphic tablets, keyboards, mice, trackballs, point of regard sensors, and other pointing interfaces, said interfaces (20) allowing an operator (19) to define a selection zone on the overview image (5, 33), a detail camera (26,34) being pointed at the corresponding part of the overview image, the situational awareness allowing an operator (19) to continuously update the position and the size of the selection zone.

12. A system according to claim 1 to 11, **characterized in that**, the man-machine interface (17) comprises a point of regard sensor, where the system uses the operator's point of regard as the desired aiming point for the overview camera (24).

13. A system according to claims 10 to 12, **characterized in that**, the computation means (13) include a frame grabber subsystem, from which a cropping subset can extract partial images, thereby electronically simulating mechanical pan, tilt and zoom actions and hence allow the apparent line-of-sight of the displayed part of the overview image to diverge from the line-of-sight of the overview camera.

14. A system according to claims 10 to 13, **characterized in that**, the computation means (13) determine when the area of interest is moved close to the border of the overview image, said computation means (13) cause the line-of-sight of the overview image to move towards the line-of-sight of the detail camera.
